# EUROPÄISCHE PATENTSCHRIFT

(11) **EP 2 723 550 B1**
(45) Veröffentlichungstag und Bekanntmachung des Hinweises auf die Patenterteilung: **01.03.2017**
(21) Anmeldenummer: 12730171.1
(22) Anmeldetag: 04.06.2012
(51) Int. Cl.: B29C 33/44, B29C 33/50, B29C 39/34, B29C 39/36, B29C 67/00

(54) **MITTELS GENERATIVER VERFAHREN HERGESTELLTER GIEßFORMEN**
CASTING MOLDS PRODUCED USING GENERATIVE METHODS
MOULES FABRIQUÉS AU MOYEN DE PROCÉDÉS GÉNÉRATIFS

(30) Priorität: 22.06.2011 EP 11171090
(43) Veröffentlichungstag der Anmeldung: 30.04.2014
(73) Patentinhaber: Technische Universität Darmstadt, 64285 Darmstadt (DE); Fraunhofer Gesellschaft zur Förderung der angewandten Forschung E.V., 80686 München (DE)
(72) Erfinder: ABELE, Eberhard, 77815 Bühl (DE); FISCHER, Jakob, 65527 Engenhahn (DE); FLASCHENTRÄGER, David, 64293 Darmstadt (DE); MELZ, Tobias, 64285 Darmstadt (DE); RAUSCHENBACH, Matthias, 64289 Darmstadt (DE); STOFFREGEN, Hanns, 60327 Frankfurt (DE)
(74) Vertreter: Stumpf, Peter
(86) Internationale Anmeldenummer: PCT/EP2012/060536
(87) Internationale Veröffentlichungsnummer: WO 2012/175323

(56) Entgegenhaltungen:
- WO-A2-2011/044903
- JP-A- 11 352 036

## Beschreibung

Die vorliegende Erfindung betrifft Gießformen, welche aufbauend auf generative Verfahren.

Die Erfindung betrifft darunter insbesondere schälbare Gießformen und solche aus dieser Gruppe, welche zur Integration von elektromechanischen Komponenten in das damit zu fertigende Gießteil geeignet, ausgeführt sind.

### Stand der Technik

Im Stand der Technik sind zahlreiche Gießformen zum Gießen auch komplexer Gießteile bekannt. Dazu gehört auch das Gießen in verlorene Formen oder mit verlorenen Modellen. Zur Herstellung von Gießteilen wird neben dem Gießwerkstoff eine Gießform benötigt. Die Herstellung einer solchen Form ist in Abhängigkeit unterschiedlicher Parameter (z. B. Gießwerkstoff, geometrische Eigenschaften und Stückzahl der zu gießenden Elemente) mit entsprechendem materiellen, zeitlichen und finanziellen Aufwand verbunden.

Ein interessantes, neues Anwendungsgebiet der Gießtechnik ist es, weitere Komponenten wie adaptronische Bauteile gießtechnisch zu integrieren. Hierbei ist oftmals die Voraussetzung einer großserientechnischen Umsetzung aufgrund der geringen Stückzahlen nicht gegeben. Geringe Stückzahlen resultieren einerseits aus einem geringen Etablierungsgrad adaptronischer Komponenten und zum anderen aus der häufigen Individualisierung ebendieser. Individuell geformte, gießtechnisch hergestellte adaptronische Komponenten sind beispielsweise im Bereich der Prothetik ein vielversprechendes Anwendungsgebiet.

Für entsprechende Fragestellungen entsteht der Bedarf, Gießformen kostengünstig, schnell, flexibel und reproduzierbar herzustellen. Hierfür legt diese Erfindung die Herstellung der Gießform in einem generativen Rapid Prototyping Fertigungsverfahren zu Grunde.

Generative Fertigungsverfahren ist eine übergreifende Beschreibung, für solche Verfahren, welche auch als Rapid Prototyping-Verfahren bezeichnet werden und welche Verfahren zur schnellen und kostengünstigen Fertigung von Modellen, Mustern, Prototypen, Werkzeugen oder Endprodukten geeignet sind. Diese Form der Fertigungsverfahren erfolgt basiert auf computererzeugten Datenmodellen aus formlosen (Flüssigkeiten, Pulver u. ä.) oder formneutralen (band-, drahtförmig) Material mittels chemischer und/oder physikalischer Prozesse. Obwohl es sich um formende Verfahren handelt, sind für ein konkretes Gießteil nicht besondere Werkzeuge von Nöten, welche die entsprechend zu erzeugende Gießteilgeometrie eingeprägt haben. Die Gießteilgeometrie liegt rein als Datensatz vor und die Werkzeuge bestehen rein aus den Werkzeugen, welche die generativen Verfahren ausführen.

Zu diesen Verfahren zählen -nicht abschließend:

Photolithographische Verfahren, Photopolymerisation durch schichtweises Aushärten aus einem Flüssigkeitsbad, schichtweises Auftragen und Verfestigen von Pulverschichten, schichtweises Austragen eines Bindemittels in einen Pulververbund, Energiestrahldepositionsverfahren in Metallpulver, Kunststoffextrudertechnik, wie bspw. Fused-Deposition-Modelling, kurz FDM und weitere oder synonym zu verstehende Verfahren, wie 3D Printing; Fused Deposition Modeling; Kaltgasspritzen; Laminated Object Modelling; Stereolithografie; selektives Laserschmelzen; selektives Lasersintern etc.

Die hier im Folgenden dargestellten Prototypen wurden mittels Selektivem Laserschmelzen erzeugt. Auch andere der oben genannten Verfahren wurden erfolgreich zur Umsetzung der Erfindung studiert.

Um Gießteile herstellen zu können, wird eine Gießform benötigt, die das Negativ des zu erstellenden Gießteils abbildet. Bei der Erstellung einer solchen Negativ-Gießform wird zwischen Dauerformen und verlorenen Formen unterschieden.

Dauerformen, die für eine mehrmalige Verwendung geeignet sind, sind mit einem immensen kosten- und zeitintensiven Aufwand verbunden. Auch bestehen in diesem Zusammenhang Fertigungs- und Entformbarkeits-Restriktionen (zum Beispiel sind Hinterschneidungen oftmals nicht realisierbar).

Verlorene Formen hingegen werden nach der Verwendung zerstört, damit ein Zugang zu dem Gießteil möglich ist. Die Erstellung einer verlorenen Form setzt die Anfertigung eines Modells des späteren Gießteils voraus. Das Modell ist notwendig, um die Negativ-Gießform zu erstellen.

Für die vorgesehene Anwendung - d.h. im Bereich von kleinen Stückzahlen und/oder bei sehr komplexen Gießteilen - sind beide derzeitige Lösungen nicht geeignet. Gegen Dauerformen sprechen der zeitliche und finanzielle Aufwand sowie die Gestaltungsrestriktion. Die Modellherstellung bei verlorenen Formen ist ebenfalls für die kostengünstige, schnelle, flexible und reproduzierbare Fertigung von Gießteilen aufgrund der genannten Anforderungen ungeeignet.

Besonders nachteilig im Stand der Technik ist das Entfernen der Gießformen, insbesondere bei sehr komplexen Freiformen oder mit großen Hinter- oder Unterschneidungen.

Aus WO 2011/044903 A2 ist eine Gießform bekannt, die anhand eines CAD-Modells mittels 3D-Drucks individuell erstellt werden kann. Dabei wird die spätere Gießform aus mehreren Teilformen zusammengesetzt, wobei diese wiederum zum leichteren Lösen vom späteren Gießteil mit Sollbruchstellen in Form von geschwächten Bereichen versehen werden können, sodass die Gesamtform einfach aufgebrochen werden kann. Die Gießform ist demnach mehrstückig ausgestaltet.

Mit der JP 11 352 036 A ist eine Gießform zum Gießen von Proben für Zugtests gezeigt, die eine zylindrische Form aufweist. Diese zylindrische Gießform weist eine Lasche auf, die in Längsrichtung durchgehend ist. Die Lasche ist dabei beispielsweise mittels Einstanzungen gebildet, die in Längsrichtung verlaufen. Ferner wird die Lasche mit einer Angriffsgeometrie versehen, wobei die Lasche aus der Gießform herausgelöst werden kann, indem daran gezogen wird. Damit ergibt sich eine Öffnung der zylindrischen Gießform, sodass diese vom späteren Gießteil entfernt werden kann. Dabei verlaufen die Verbindungsbereiche parallel zur Hauptachse des späteren Gießteils. Dies ist bei einer Gießform nach JP 11 352 036 A nicht weiter kritisch, da lediglich relativ stabile Gießteile hergestellt werden sollen. Die Gießform weist eine sehr einfache geometrische Form.

Aufgrund der häufig mit komplexen Geometrien verbundenen Fragilität der Gießteile, ist beim Entfernen der Gießformen eine große Vorsicht anzuwenden, etwa um die Gießteile durch unvorteilhafte Kraftverteilung beim Entfernen der Gießform z.B. nicht an der dünnsten Stelle zu zerbrechen.

### Aufgabe

Es ist Aufgabe der Erfindung, die vorgenannten Nachteile im Stand der Technik zu beseitigen oder zumindest zu mindern. Dabei soll eine mit geringem Aufwand herstellbare Gießform angegeben werden, die unter geringer Belastung des Gießteils lösbar ist.

### Lösung der Aufgabe

Diese Aufgabe wird gelöst durch eine Gießform mit den Merkmalen des Anspruchs 1 und durch ein Verfahren mit den Merkmalen des Anspruchs 10.

Vorteilhafte Ausführungsformen der Erfindung werden in der folgenden Beschreibung und in den Unteransprüchen offenbart.

Durch die Verwendung eines generativen Rapid Prototyping Fertigungsverfahrens ist der zeitliche und damit finanzielle Aufwand zur Herstellung der Gießform unabhängig vom Komplexitätsgrad des Gießteils und im Vergleich zu konventionellen Fertigungsverfahren deutlich geringer.

Individuelle geformte und mit komplexen Geometrien (z.B. Freiformflächen, Hinterschneidungen) versehene Gießteile lassen sich zuverlässig und kosteneffizient herstellen.

Die Mantelflächen der Gießform können so ausgestaltet sein, dass sie für gewisse Medien (bspw. zum Entweichen von Luft) durchlässig sind.

Entgegen gefräster, gedrehter oder sonst durch spanende Bearbeitung erzeugte Formen wird der Materialaufwand reduziert.

Elemente der Gießform können bewusst so ausgestaltet werden, dass sie nach der Entformung am Gießteil verbleiben und dort eine Funktion erfüllen (bspw. als Befestigungselement oder Kontaktierung).

Es ist kein Urmodell des späteren Gießteils nötig.

Entgegen konventioneller mehrteiliger Gießformen kann auf Maßnahmen zur Fixierung, Arretierung und Ausrichtung der einzelnen Formteile zueinander weitestgehend oder sogar vollständig verzichtet werden.

Oberflächenbeschaffenheit und Steifigkeit der Zielstruktur kann wie beim Gießen üblich durch entsprechende Formgebung (z.B.: Rippen, Oberflächentextur) gezielt eingestellt werden. Solche Maßnahmen können entgegen klassischen Gießverfahren besonders schnell und kosteneffizient umgesetzt werden.

### Ausführungsbeispiele

Die Erfindung sieht zur Lösung, insbesondere zur vereinfachten Entfernung der Gießform vor, schon bei der Herstellung der Gießform, durch geeignete Anordnung und Ausführung der Gießformwand, in Form von Elementen und Verbindungsbereichen zwischen diesen Elementen der Wandung, dafür Sorge zu tragen, dass die Elemente später einfach vom Gießteil "abgeschält" werden können.

Das Entfernen der Gießform kann in Form von "schälen" so erfolgen, dass keine oder nur unwesentliche Kraft oder Druck in der Richtung angewendet wird, welche zum Bruch des Gießteils führen könnte.

Dazu ist in einem vorteilhaften Ausführungsbeispiel vorgesehen, etwa bei einem im wesentlichen gestreckten Gießteil mit Unterschneidungen in einem mittleren Bereich, die Verbindungsbereiche der Elemente, nicht parallel, sondern im wesentlichen leicht geneigt zur Hauptachse des Gießteils vorzusehen.

Beim Entfernen der Segmente ist zudem gegebenenfalls vorgesehen, dazu angebrachte Angriffsflächen oder -bereiche im Falle von gestreckten Gießformen- am oberen oder unteren Ende der Gießform vorzusehen, so dass das Entfernen eines entsprechenden Elementes durch Ziehen von oben nach unten oder umgekehrt, oder bei besonders fragilen Gießteilen diagonal zur Längsachse des Gießteils erfolgt. So wird eine Druck- oder Kraftanwendung - parallel zur Längsachse - auf einen unterschnittenen und damit dünneren Bereich des Gießteils vermieden.

Bei einem im wesentlichen gestreckten aber runden oder auch bei einem im wesentlichen kugelförmigen Gießteilen ist in einem weiteren Ausführungsbeispiel vorgesehen, zwei Angriffs-Bereiche oder -Flächen vorzusehen, welche lediglich in einem kleinen Abstand und im Wesentlichen sich gegenüberstehend angeordnet sind.

Durch gleichzeitigen Angriff an diesen beiden Bereichen oder Flächen ist es möglich, die Kraft zum Abschälen des entsprechenden Elementes in nahezu perfekt entgegen gesetzter Richtung, aber quasi auf einer gedachten Achse wirken zu lassen, so dass keine Druck- oder Hebelwirkung beim Schälvorgang auf die Formwand oder das Gießteil ausgeübt wird. Die Achse der Kraftwirkung liegt dabei zunächst tangential am Umfang des runden oder kugelförmigen Körpers an und wandert mit zunehmender Schälung der beiden Wand-Elementenden durch den Mittelpunkt des Querschnitts hindurch bis der dem anfänglichen Anlagepunkt der Tangente gegenüberliegenden Punkt des Querschnitts.

Als Gießform im Sinne dieser Erfindung kann eine mittels generativem Herstellungsverfahren (Selektives Laserschmelzen, Stereolithographie, etc., siehe auch bereits oben genannte Liste oder wie in der VDI 3404 angegeben) erzeugte dünnwandige Mantelstruktur dienen, die das Volumen bzw. die Form des späteren Gießteils umfänglich oder auch gesamtoberflächlich und damit dreidimensional umschließt und damit definiert.

Entlüftungs-, Befüll- oder sonstige gewünschte/notwendige Öffnungen der Form können während des Herstellungsverfahrens durch Aussparungen an dafür vorgesehenen Stellen der Formwand erzeugt, oder durch mechanische Nachbearbeitung (z.B. Bohren, Fräsen, Erodieren) eingebracht werden. Darüber hinaus können während des Herstellungsprozesses gewünschte Stellen (teil-)porös und damit für gewisse Medien durchlässig ausgestaltet werden (z.B. zum Entweichen von Luft beim Einfüllen der Gießmasse).

Die so gewonnene Form kann zum Vergießen des Gießwerkstoffes verwendet werden. Zum Entformen des Gießteils wird die Schälfunktion entlang von Verbindungsbereichen, z.B. in Form von Nuten (dünnere Manteldicke) an der Außenkontur der Mantelstruktur genutzt. Die einzelnen Segmente zwischen den Verbindungsbereichen, z.B. in Form von Nuten, können durch Abschälen vom Gießteil gelöst werden. Hierdurch ist es möglich auch Teile mit geometrischen Hinterschneidungen oder komplexe Freiformflächen beschädigungsfrei zu Entformen. Vorzugsweise, jedoch nicht ausschließlich, sollen Kunststoffe als Gießmaterial zum Einsatz gebracht werden, um kritische Gießtemperaturen zu vermeiden.

Aussteifungen an einzelnen oder allen Elementen oder Segmenten der Gießformwand werden bereits während des Herstellungsprozesses gefertigt. Diese können weitere Elemente wie z.B. Kanäle zum Anschluss an Kühl- oder Heizkreisläufe, elektronische Kontaktierungen oder weitere Funktionsflächen die z.B. eine Ausrichtung/Befestigung der Form mittels Verschraubung, Formschluss oder ähnlichem an andere Bauteile ermöglicht, enthalten.

Nachfolgend wird die Erfindung anhand von graphisch dargestellten Ausführungsbeispielen unter Bezug auf die Zeichnung näher erläutert. Weiter unten werden weitere Ausführungsbeispiele nur schriftlich dargestellt. Es zeigen zunächst:
Fig. 1: Eine 3-D Ansicht von 3 Gießformen und der darin einzugießenden Kappe eines Piezo-Stapelaktors (im Hintergrund);
Fig. 2a: Eine vergrößerte 3-D-Ansicht einer Gießform mit oben sichtbar eingebrachter Deckkappe (für einen Piezostapelaktor);
Fig. 2b: Einen Schnitt durch Fig. 2a;
Fig. 3a - c
   a) Die Gießformwand samt schon eingebrachten Stapelaktor vor dem Eingießen der Gießmasse;
   b) Die teilweise abgeschälte Gießformwand (nach dem Vergießen und Aushärten der Gießmasse) mit den einzelnen Wandelementen;
   c) Das fertige Gießteil mit den beiden Kappen des Piezostapelaktors am oberen und unteren Ende, sowie dem von Gießmasse umgebenen Mittelteil des Gießteils. Das Gießteil verbindet somit effektiv die metallischen Komponenten des Stapelaktors.

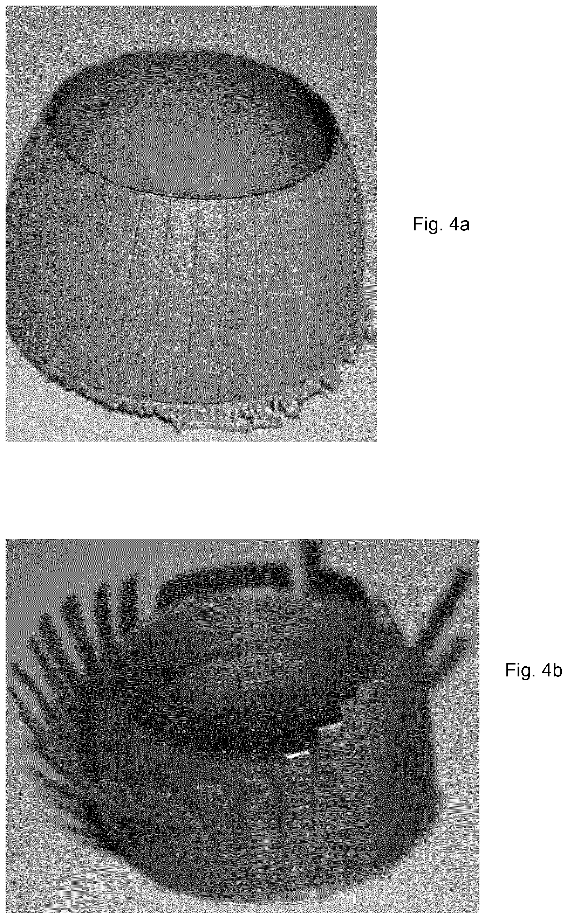

Fig. 4a: Eine Photographie einer Gießformwand in Form des Segments einer Kugel mit i.W. senkrecht verlaufenden Segmenten und Verbindungsbereichen in Form von Nuten;
Fig. 4b: Die Gießformwand aus Fig. 4a nach teilweise erfolgter Schälung;

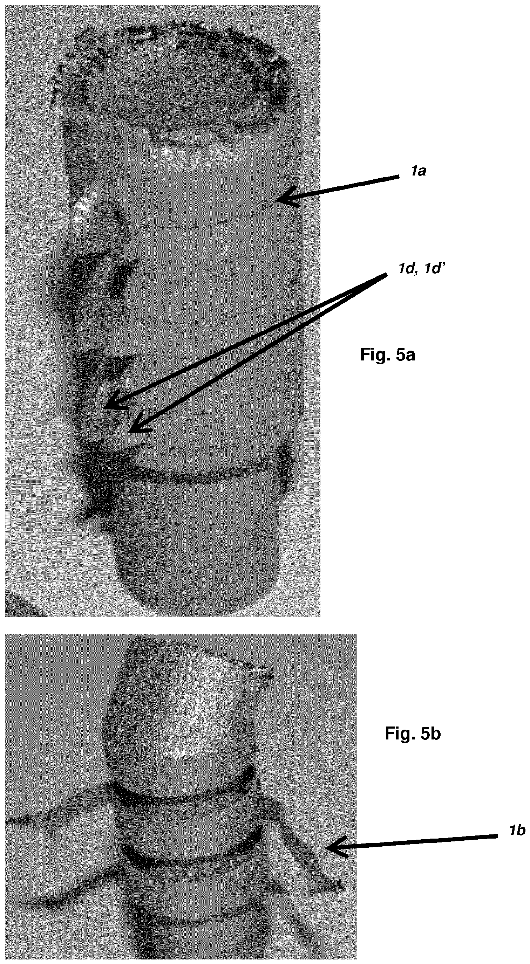

Fig. 5a: Eine Photographie einer gestreckten, zylindrischen Gießformwand mit horizontal zur Längsachse verlaufenden Wandsegmenten und Verbindungsbereichen, sowie 2 sich gering beabstandet, gegenüber stehend angebrachten AngriffsFlächen, zum Angriff für den Schälvorgang;
Fig. 5b: Die Gießformwand aus 5a) nach dem Schälvorgang;

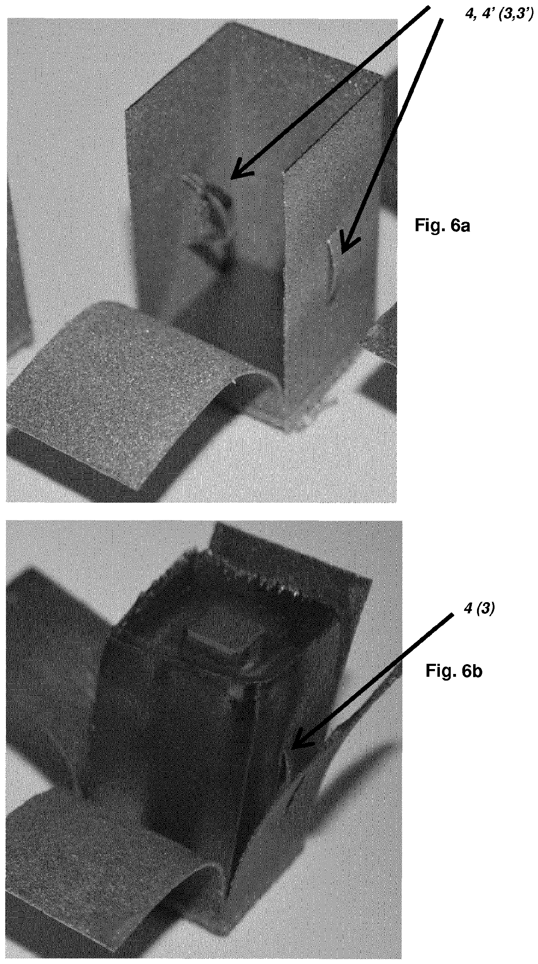

Fig. 6a: Eine Photographie einer rechteckigen Gießformwand nach Schälung des vorderen Elementes; Deutlich sichtbar sind durch die Wand nach innen und aussen ragende Anbauteile (an der linken Wand nach innen ragend sichtbar und an der rechten Wand nach aussen ragend sichtbar).
Fig. 6b. Die Gießformwand mit innen eingebrachtem Gießteil und darin fixiertem Eingussteil; Deutlich sichtbar ist an dem Wandelement rechts, dass ein inneres Element aus der Wand heraus geschält wurde und in dem Gießteil, zur Kontaktierung des Eingussteils mit der Oberfläche des Gießteils verblieben ist. In diesem Fall handelt es sich um eine elektrische Kontaktierung.

Im Folgenden werden die Figuren näher beschrieben.

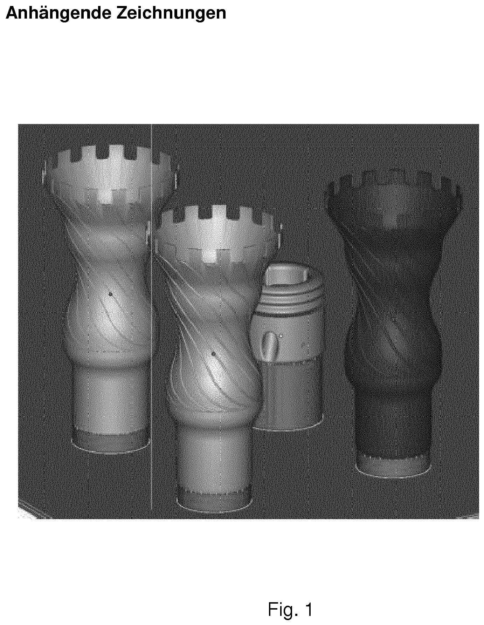

Fig. 1 verdeutlicht bei gestreckten und in der Mitte sich verjüngenden Gießformen, die vorzugsweise diagonal zur Längsachse vorzusehenden Verbindungsbereiche in Form von Nuten. Am oberen Ende der Gießformwand sind zinnenartig ausgeführte Angriffsflächen vorgesehen. Durch Angriff an diesen Flächen und parallel zur Richtung der Verbindungsbereiche und von oben nach unten verlaufende Krafteinwirkung lässt sich dass entsprechende Segment diagonal zur Längsachse der Form und damit des späteren Gießteil von diesem lösen. Dadurch wird eine unvorteilhafte Kraftwirkung besonders auf die verjüngte Mitte des Gießteils beim Abschälvorgang vermieden.

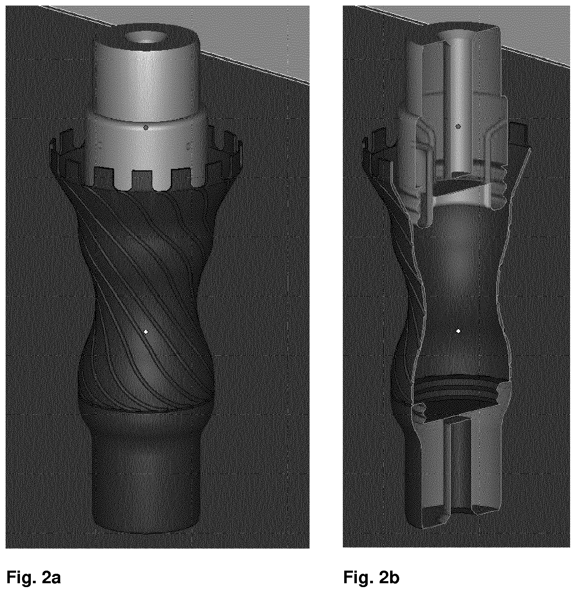

Fig. 2b stellt im oberen Bereich einen Kappe eines Aktors dar, welcher durch Eingießen später einen Teil eines Gießteils bilden wird. Durch Vorsehung von Einbauteilen (4) in die Innenwand der Formwand (hier nicht dargestellt) lässt sich eine solche Kappe besonders gut für den Gießvorgang fixieren.

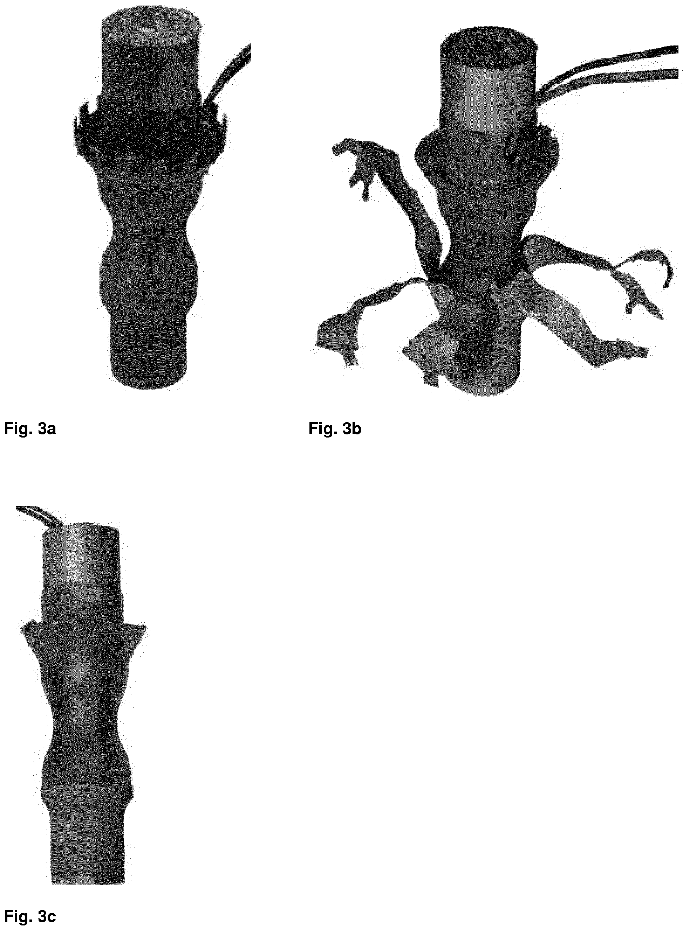

Fig. 3 a bis c) zeigt einen eingebauten Aktor (mit oberer und unterer Kappe), sowie sichtbaren Stromleitungen, nach dem Schälen und im fertigen Zustand, d.h. in einem Zustand, wo Aktor und die diesen teilweise umhüllenden und verbindenen Gießmasse ein einziges Gießteil bilden.

Die in Fig. 3b) gut sichtbaren Kabel dienen der Ansteuerung des Aktors; es sind nur die Aktorkappen zu sehen. Der Aktor soll bspw. als Schwingungsanreger funktionieren. Damit er die Kraft auf eine passive Struktur übertragen kann, benötigt er eine Anbindung an diese. Die Anbindung wird über die Käppchen oben und unten vom Aktor gewährleistet. Die eine Kappe ist Bestandteil der Gießformwand und bleibt nach dem Abschälen der Segmente übrig; das obere Käppchen wird vor dem Vergießen aufgesetzt und erhält durch die ausgehärtete Gießmasse eine feste Anbindung. Die Gießmasse dient in diesem speziellen Fall dem Schutz des Aktors und der Herstellung der Verbindung von oberer und unterer Aktorkappe. Das Abschälen erfolgt, in dem man an einer der Zinnen (bspw. mit einer Zange) reißt und das Wandsegment, wie bei einer Orange, entlang der dafür vorgesehenen Nuten abschält. Das eingießen von elektromechanischen Komponenten (hier eines Aktors) stellt eine mögliche Anwendung der Erfindung dar. Damit dieser Aktor seine Funktion (Kraftübertragung) ausüben kann, benötigt er eine Anbindung an eine passive Struktur. Dies wird durch die metallischen Aktorkappen ermöglicht.

Fig.4 a und b) zeigt eine Wand in Form des Segments einer Halbkugel, mit von oben nach unten verlaufenden Wandsegmenten und Verbindungsbereichen. Nach dem Eingießen in 4a zeigt die Fig. 4b die teilweise abgeschälte Wand. In diesem Falle fungieren obere Bereiche der Wandsegmente als Angriffsfläche für den Schälvorgang.

Fig. 5a und b) zeigt ein besonderes Ausführungsbeispiel, bei welchem die Segmente und Bereich (1 b, 1 c) senkrecht zur Längsachse der späteren Gießteils verlaufen, aber in diesem Falle zwei und nicht eine Angriffsfläche (1d) pro Segment (1b) vorgesehen sind. In diesem Falle erfolgt die Krafteinwirkung zum Schälen durch gleichzeitigen, aber entgegengesetzten Angriff an beiden Flächen. Dadurch wird im Idealfall keine Hebel- oder Druckwirkung auf das Gießteil im Innern der Gießformwand ausgeübt.

Fig. 6a und b) zeigt eine rechteckige Gießformwand, bei der im linken und rechten Segment jeweils ein weiteres Segment eingesetzt ist. Um dieses im Mittenbereich der beiden Segmente angebrachte Segment ist wiederum ein Verbindungsbereich angebracht. Durch Wahl eines weicheren Material oder einer geringeren Dicke des Materials in diesem Verbindungsbereich ist es möglich durch Angriff eines am oberen Ende von Gießmasse freiliegenden Bereiches, das große linke und rechte Segment so abzuschälen, dass das in der Mitte befindliche Segment, samt eines daran angebrachten, nach innen in die Gießmasse und bis an das Eingussteil (3) ragende Anbauteil (4) in der Gießmasse stecken bleibt. Dadurch wird - in diesem Falle eine elektrische - Kontaktierung des Eingussteils (Vierkant in der Gießmasse) erreicht.

In einem weiteren, nicht graphisch dargestellten Ausführungsbeispiel, ist vorgesehen, den oder die Verbindungsbereiche, entlang ihrer Erstreckung, in der Nähe der Angriffsflächen mit weicherer oder weniger zäher Konsistenz, im Vergleich zu den umgebenden Segmenten, vorzusehen, als in Bereichen weit entfernt von den Angriffsflächen. Die kann z.B. durch Wahl eines anderen Materials oder durch Variation der Herstellungsparameter bei der Herstellung der Gießformwand in dem Verbindungsbereich oder -bereichen, erfolgen. Durch diese Maßnahme wird das Einreißen des oder der Verbindungsbereiche in der Nähe der Angriffsfläche, bei meist noch im Wesentlichen senkrechter Krafteinwirkung in Relation zur Segmentoberfäche, erleichtert. Im späteren Verlauf des Abschälens des Segments, d.h. im späteren Verlauf der Rißbildung entlang des oder der Verbindungsbereiche kann dann eine höhere Kraft aufgewendet werden. In diesen entfernter von der Angriffsfläche liegenden Bereichen ist eine zähere Ausführung der Verbindungsbereiche für den Abschälvorgang unschädlich, aber für die Dichtigkeit oder Robustheit der Gießwanddung eventuell erforderlich, da auf die Gießformwand höhere Drücke, durch eine darüber befindliche schwerere Gießmasseneinheit einwirken. Besonders im Falle von nach dem Einfüllen zunächst flüssigen Gießmassen.

In einem weiteren, nicht dargestellten, vorteilhaften Ausführungsbeispiel, ist vorgesehen, den Umstand zu nutzen, dass die genaue Form des Gießteils in Form von Datensätzen in Rechnern vorliegt. Dieser Umstand kann dazu genutzt werden, die möglichen Bruchlinien einer möglichen Beschädigung des Gießteils beim Entfernen der Gießformwand zu berechnen. Entsprechend dieser Berechnung können, bei der hier vorgeschlagenen Erfindung besonders einfach solche Linienführungen oder flächigen Ausgestaltungen für die Segment-Verbindungsbereiche oder Wandsegmente gewählt werden, dass die zum Schälen später einwirkende Kraft so gerichtet ist, dass sie nicht zum Bruch des Gießteils führt. Etwa in dem - wie oben schon gezeigt - die Verbindungsbereiche und Segmente zwar in gleicher Breite, aber nicht parallel zur Längsachse des Gießteils, sich über die Mantelfläche des Gießteils geführt werden (siehe Fig. 1, 2a bis 2c).

In einem weiteren, nicht dargestellten, besonders vorteilhaften Ausführungsbeispiel, ist vorgesehen, in den Verbindungsbereichen entsprechende Partikel, z.B. magnetische Partikel vorzusehen, welche in einer solchen Konzentration vorliegen, dass diese durch einen über diesen Verbindungsbereich geführten Magneten, und damit die Verbindungsbereiche im Vergleich zu den Segmenten, so stark angezogen werden, dass die Bereiche aufreißen und der Schälvorgang ohne mechanischen Angriff erfolgen kann. Selbstverständlich sind auch andere Verbindungen von Partikeln und elektromagnetischen Feldeingriffen vorstellbar. Etwa durch Spulen odgl..

In einem weiteren, nicht dargestellten, vorteilhaften Ausführungsbeispiel, ist vorgesehen, dass die Gießformwand aus mehreren Schichten aufgebaut ausgeführt ist. Vorzugsweise wird an Innenwandung der innersten Schicht ein Trennmittel zum leichteren Ablösen der Segmente vom Gießteil vorgesehen.

Für die Herstellung besonders komplexer Gießteile ist vorgesehen, dass mehrere Segmente jeweils durch Verbindungsbereiche ineinander liegend, etwa in der Form von konzentrischen Kreisen, als Teil der Gießformwand vorgesehen sind. Dabei ist es insbesondere für den Fall, wo ein Segment im Inneren ein durch die Wandung hindurch ragendes Eingussteil aufweist, von Vorteil, wenn der das Eingussteil umgebende Verbindungsbereich eine andere Zähigkeit aufweist, als die anderen Verbindungsbereiche, welche an dem Segment in den äußeren Bereichen vorgesehen sind.

Ein besonders vorteilhaftes Verfahren zur Herstellung der Gießformwand ist dadurch gegeben, wenn beim Schritt der Berechnung der Positionierung und des Verlaufes und der jeweiligen Breite etc. der Verbindungsbereiche, auch berücksichtigt wird, in welcher Richtung später beim Schälen Druck/Kraft auf das Gießteil ausgeübt wird und dabei berücksichtigt wird, welcher Verlauf günstiger ist, um einen Bruch des Gießteils beim Schälen zu vermeiden. D.h. die Information aus dem Computermodell weiter durch "Bruchkraftlinien" angereichert werden und nachfolgend, diese Informationen genutzt werden, um die Verbindungsbereiche passend zur Vermeidung eines Bruchs beim Schälen zu planen und dann herzustellen.

Die in der vorstehenden Beschreibung, in den Figuren sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 1: Gießform
- 1a: Gießformwand
- 1b: Gießformwandsegment
- 1c: Gießformwandsegment-Verbindungsbereich
- 1d: Gießformsegment-Angriffsfläche
- 2: Gießmasse
- 3: Eingussteil
- 3a: Eingussteil in Form eines Aktors
- 4: Anbauteile
- 10: Gießteil

## Patentansprüche

1. Gießform, zur Herstellung eines Gießteils, aufweisend eine an das Gießteil formgetreu angepasste Gießformwand, wobei die Gießformwand aus mindestens zwei Segmenten bestehend ausgeführt ist, welche über einen Verbindungsbereich einstückig miteinander verbunden sind, wobei die gesamte Gießformwand das Gießteil vollumfänglich einstückig ausgeführt umfasst und/oder sämtliche Segmente und Verbindungsbereiche, welche das spätere Gießteil bedecken, einstückig miteinander verbunden, ausgeführt sind, wobei die Verbindungsbereiche in Form von Nuten vorgesehen sind,
**dadurch gekennzeichnet, dass**
- die Gießform gestreckt ist und sich in der Mitte verjüngt,
- am oberen Ende der Gießformwand zinnenartig ausgeführte Angriffsflächen vorgesehen sind und
- zumindest die Segmente und der Verbindungsbereich durch ein generatives Herstellverfahren erzeugt sind, wobei die Verbindungsbereiche diagonal zu der Längsachse der gestreckten Gießform vorgesehen sind.

2. Gießform nach Anspruch 1, **dadurch gekennzeichnet, dass** der mindestens eine Verbindungsbereich relativ zu den angrenzenden Segmenten so ausgeführt und angeordnet ist, dass ein angrenzendes Segment durch Schälen vom Gießteil lösbar ist.

3. Gießform nach einem der Ansprüche 1 bis 2, **dadurch gekennzeichnet, dass** der mindestens eine Verbindungsbereich in der Materialstärke dünner, aus einem weniger festen oder zähen Material oder aus anderweitig leichter auftrennbarem Material, als das Material der angrenzenden Segmente, gefertigt ist.

4. Gießform nach einem der Ansprüche 1 bis 3, **dadurch gekennzeichnet, dass** der mindestens eine Verbindungsbereich entlang seiner Ausdehnung einen Gradienten der Zähigkeit oder/und verschiedene Zähigkeitswerte oder/und verschiedene Ausdehnungen parallel zur Oberfläche des Gießteils aufweist.

5. Gießform nach einem der Ansprüche 1 bis 4, **dadurch gekennzeichnet, dass** an den Wandsegmenten jeweils mindestens eine Angriffsfläche, geeignet zum Schälen des betreffenden Segments von dem Gießteil ausgeführt, vorgesehen ist.

6. Gießform nach einem der Ansprüche 1 bis 5, **dadurch gekennzeichnet, dass** an der Wand entweder im Bereich der Segmente oder und im Bereich der Verbindungsbereiche, Aufnahme- oder/und Fixierungsbereiche oder Anbauteile für die Halterung oder/und Fixierung oder die Durchführung von Eingussteilen, welchen in die Gießmasse (2) einzubetten sind, vorgesehen sind.

7. Gießform nach einem der Ansprüche 1 bis 6, **dadurch gekennzeichnet, dass** in der Wand Aussparungen oder/und Kanäle oder/und Durchführungen vorgesehen sind, um an einzugießenden Eingussteilen angebrachte oder/und aus dem Gießteil heraus zuführendende Elemente durch die Wand zu führen oder/und in dieser aufzunehmen.

8. Gießform nach einem der Ansprüche 1 bis 7, **dadurch gekennzeichnet, dass** die Verbindungsbereiche im Bereich der vorgesehenen Angriffsflächen oder - bereiche dünner, oder weniger zäh oder anderweitig leichter auftrennbar ausgeführt vorgsehen sind, als in den Bereichen weiter entfernt davon, um ein Abschälen des entsprechenden Segmentes leicht einzuleiten.

9. Gießform nach einem der Ansprüche 1 bis 8, **dadurch gekennzeichnet, dass** innerhalb der Fläche eines Segmentes ein in sich geschlossener oder nicht geschlossener Verbindungsbereich vorgesehen ist, welcher ein inneres Segment zumindest teilweise umgibt, wobei die Zähigkeit oder Materialwahl oder - konsistenz des Verbindungsbereiches so getroffen ist, dass bei einer Abschälung des äußeren Segmentes der innere Verbindungsbereich so einreißt, dass das innere Segment an oder im Falle, dass das innere Segment mit einem nach innen ragenden Anbauteil ausgeführt ist, das Anbauteil im späteren Gießteil haften bleibt und/oder das innere Segment am späteren Gießteil haften bleibt.

10. Verfahren zur Entfernung einer Gießform nach einem der Ansprüche 1 bis 9, **gekennzeichnet durch** die folgenden Schritte:
a) Ansetzen einer Kraft an einer Angriffsfläche
b) Einwirkung der Kraft an dem der oder den im Ansatz befindlichen Angriffsfläche oder -flächen, im Wesentlichen mit mindestens einer Kraftkomponente in Richtung der Normalen zur Oberfläche des Gießteils oder der parallel verlaufenden Oberfläche der Gießform, in dem Oberflächenbereich, welcher **durch** die Krafteinwirkung gerade von dem Gießteil gelöst wird und im Wesentlichen parallel zu den benachbarten Verbindungsbereichen,
c) Fortgesetzte Einwirkung der Kraft bis das Segment ausreichend zur Entnahme des Gießteils abgeschält ist,
d) Im Falle von mehreren Segmenten, Wiederholung der Schritte a) bis c) bis zur vollständigen Abschälung aller Segmente der Gießformwand

11. Verfahren nach Anspruch 10, wobei im Schritt b) die Krafteinwirkung an der Angriffsfläche nach möglichst kurzer Schällänge unter nahezu 0° zur Tangentialen im gerade abzuschälenden Oberflächenbereich und parallel zu den benachbarten Verbindungsbereichen erfolgt.

12. Verfahren zum Gießen von Teilen, **gekennzeichnet durch** Einsatz eines Verfahren nach einem der Ansprüche 10 bis 11.

13. Verfahren zur Herstellung von Gießformen nach einem der Ansprüche 1 bis 9 mittels generativen Herstellungsverfahren, wobei die Gießformwand aus mindestens zwei Segmenten und einem dazwischen liegenden Verbindungsbereich bestehen, welche einstückig miteinander verbunden ausgeführt sind, wobei die Führung der Verbindungsbereiche und deren Dicke oder Zähigkeit so gewählt werden, dass zuvor, auf der Basis des vorliegenden 3-D-Modells des Gießteils, berechnete Krafteinwirkungen, welche zum Bruch des umformten Gießteils beim Vorgang des Entfernens der Segmente, wie etwa durch Schälen der Segmente, führen könnten, vermieden werden.

## Claims

1. Casting mould for producing a casting, featuring a mould wall accurately adapted to the shape of the casting, said mould wall being executed to consist of at least two segments, these being joined by a connection area to form one piece; whereas the entire mould wall is executed so as to fully encompass the casting as one piece, and/or all segments and connecting areas that will cover the subsequent casting are executed as one inter-connected piece; the connecting areas being intended to be formed as grooves, **characterised by**
- the casting mould being elongated and narrower in the middle,
- gripping surfaces executed in a crenelated form at the upper end of the mould wall and
- at least the segments and the connecting area being manufactured by a generative production process, with the connecting areas positioned diagonally to the longitudinal axis of the elongated casting mould.

2. Casting mould according to Claim 1, **characterised by** the - at least one - connection area being executed and arranged, relatively to the adjoining segments, so that an adjoining segment can be separated from the casting by peeling off.

3. Casting mould according to one of the claims from 1 to 2, **characterised by** the - at least one - connection area manufactured from thinner material, a less rigid or resilient material or an otherwise more easily severable material than the material of the adjoining segments.

4. Casting mould according to one of the claims from 1 to 3, **characterised by** the - at least one - connection area having a gradient of toughness or/and different toughness values or/and different dimensions parallel to the surface of the casting.

5. Casting mould according to one of the claims from 1 to 4, **characterised by** the provision of at least one gripping surface, suitable for separating the affected segment from the casting, on each of the wall segments.

6. Casting mould according to one of the claims from 1 to 5, **characterised by** the provision on the wall, either in the area of the segments or in the connection areas, of reception or/and fastening areas or attachments for holding or/and fixing or leading through cast-in parts for embedding in the casting compound (2).

7. Casting mould according to one of the claims from 1 to 6, **characterised by** the provision in the wall of recesses or/and channels or/and ducts, whereby elements fitted to cast-in parts for embedding or elements to be led out from the casting can be passed through the wall or accommodated in it.

8. Casting mould according to one of the claims from 1 to 7, **characterised by** the connection areas in the area of the intended gripping surfaces or gripping areas being thinner, or less tough, or otherwise more easily separable than in areas further away from them, thereby making it easier to start stripping off the relevant segment.

9. Casting mould according to one of the claims from 1 to 8, **characterised by** provision being made in the surface of a segment for a self-contained or not enclosed connection area that at least partially surrounds an inner segment, whereby the toughness, or the choice, or the consistence of the material is selected so that, when the outer segment is peeled off, the inner connection area tears in a manner that allows the inner segment - or, if the inner segment is implemented with an inward-protruding fixture, the fixture - to remain attached to the subsequent casting and/or the inner segment to remain attached to the subsequent casting.

10. Procedure for removing a casting mould according to one of the Claims from 1 to 9, **characterised by** the following steps:
a) Application of a force to a gripping surface
b) Effect of the force on the gripping surface or surfaces to which it is being applied, essentially with at least one force component acting in the normal direction to the surface of the casting or to the parallel-aligned surface of the casting mould, in the surface area which is just then being detached from the casting by the effect of the force and essentially running parallel to the adjoining connection areas
c) Continued influence of the force until the segment is peeled off sufficiently to be removed from the casting.
d) If there are multiple segments, repetition of steps a) to c) until all segments of the mould wall are completely peeled off.

11. Procedure according to Claim 10, whereby in step b), the effect of the force on the gripping surface is applied after the shortest possible peel-off length at nearly 0° to the tangential direction in the surface area to be peeled off at that time and in parallel to the adjoining connection areas.

12. Procedure for casting parts, **characterised by** the use of a procedure according to one of the claims from 10 to 11.

13. Procedure for producing casting moulds according to one of the claims from 1 to 9 by means of generative manufacturing procedures, with the mould wall consisting of at least two segments and a connection area between them, all being interconnected to form one piece; whereby the execution of the connection areas and their thickness or toughness are selected so that previous calculations of the force effects, based on the available 3D model of the casting, can avert the possible breakage of the formed casting when the segments are removed, for instance when the segments are peeled off.

## Revendications

1. Moule pour la fabrication d'une pièce moulée, comprenant une paroi adaptée qui correspond à la forme du moule, dans lequel la paroi est composée d'au moins deux segments, lesquels sont reliés l'un à l'autre par une zone de liaison qui les maintient en un seul bloc, dans lequel la paroi entière entoure pleinement la pièce moulée en un seul bloc et/ou l'intégralité des segments et des zones de liaison, qui recouvrent la future pièce moulée, sont reliés les uns aux autres en un seul bloc, les zones de liaison étant en forme de cannelures,
**caractérisé en ce que**
- le moule est allongé et qu'il se rétrécit en son centre,
- des surfaces d'attaque crénelées sont prévues à l'extrémité supérieure de la paroi du moule et
- au moins les segments et la zone de liaison sont réalisés selon un procédé de fabrication lors duquel les zones de liaison sont prévues de sorte à être disposées diagonalement à l'axe longitudinal du moule allongé.

2. Moule selon la revendication 1, **caractérisé en ce que** l'au moins une zone de liaison est construite et agencée par rapport aux segments adjacents de telle sorte qu'un segment adjacent soit détachable à l'écroûtage de la pièce moulée.

3. Moule selon l'une quelconque des revendications 1 à 2, **caractérisé en ce que** l"au moins une zone de liaison est fabriquée de telle sorte qu'elle présente une épaisseur de matériau plus fine, qu'elle soit réalisée à base de matériau moins dense ou moins dur ou bien à partir d'un autre matériau plus facilement séparable que le matériau des segments adjacents.

4. Moule selon l'une quelconque des revendications 1 à 3, **caractérisé en ce que** l'au moins une zone de liaison comporte sur la totalité de son étendue un gradient de résistance et/ou différentes valeurs de résistance et/ou différentes extensions parallèlement à la surface de la pièce moulée.

5. Moule selon l'une quelconque des revendications 1 à 4, **caractérisé en ce que** sur chacun des segments de paroi est prévue une surface d'attaque particulièrement adaptée pour l'écroûtage du segment concerné de la pièce moulée.

6. Moule selon l'une quelconque des revendications 1 à 5, **caractérisé en ce que** sont prévues sur la paroi, soit au niveau des segments, soit au niveau des zones de liaison, des zones de réception et/ou des zones de fixation ou des pièces de montage pour le maintien et/ou la fixation ou la mise en place de pièces de coulée, lesquelles étant destinées à être mélangées à la masse de coulée (2).

7. Moule selon l'une quelconque des revendications 1 à 6, **caractérisé en ce que** sont prévus dans la paroi des évidements et/ou des canaux et/ou des traversées, afin de faire passer dans la paroi ou d'y incorporer des éléments fixés aux pièces de coulée à couler et/ou des éléments à extraire de la pièce moulée.

8. Moule selon l'une quelconque des revendications 1 à 7, **caractérisé en ce que** les zones de liaison au niveau des surfaces ou zones d'attaque prévues sont plus fines, ou présentent moins de résistance ou sont réalisées de telle sorte qu'elles soient plus facilement séparables que dans les endroits plus éloignés de celles-ci, afin de faciliter l'écroûtage du segment correspondant.

9. Moule selon l'une quelconque des revendications 1 à 8, caractérisé en ce qu'une zone de liaison, fermée ou non fermée, est prévue à l'intérieur de la surface d'un segment, laquelle zone entoure au moins de manière partielle un segment interne, dans lequel la résistance ou le choix du matériau ou de la consistance de la zone de liaison s'effectue de telle sorte que lors d'un écroûtage du segment externe, la zone de liaison interne se déchire de telle manière que, si le segment interne est réalisé avec une pièce de montage en saillie vers l'intérieur, la pièce de montage dans la future pièce moulée reste en place et/ou le segment intérieur sur la future pièce moulée reste en place.

10. Procédé d'écartement d'un moule selon l'une quelconque des revendications 1 à 9, **caractérisé par** les étapes suivantes :
a) application d'une force sur une surface d'attaque,
b) action de la force sur la ou les surface(s) d'attaque présente(s) au départ, avec au moins essentiellement une composante de la force en direction de la normale à la surface de la pièce moulée ou en direction de la surface parallèle au moule, au niveau de la zone de surface, laquelle étant desserrée de la pièce moulée par l'action de la force et essentiellement parallèle aux zones de liaison adjacentes,
c) action de la force vers l'avant, jusqu'à ce que le segment soit suffisamment écroûté afin de pouvoir prélever la pièce moulée,
d) dans le cas où plusieurs segments sont concernés, répétition des étapes a) à c) jusqu'à l'écroûtage total de l'intégralité des segments de la paroi du moule.

11. Procédé selon la revendication 10, dans lequel l'action de la force sur la surface d'attaque lors de l'étape b) se produit sur la longueur d'écroûtage la plus réduite possible à presque 0 °de la tangente de la zone de surface à écroûter et parallèlement aux zones de liaison adjacentes.

12. Procédé de coulée de pièces, **caractérisé par** l'utilisation d'un procédé selon l'une quelconque des revendications 10 à 11.

13. Procédé de fabrication de moules selon l'une quelconque des revendications 1 à 9 à l'aide de procédés de fabrication dans lesquels la paroi est composée d'au moins deux segments et d'une zone de liaison située entre lesdits segments, lesquels sont reliés les uns aux autres en un seul bloc, dans lequel le choix de la conduite des zones de liaison et de leur épaisseur ou de leur résistance s'effectue de telle sorte qu'au préalable soient évitées, sur la base du modèle 3D fourni de la pièce moulée, les actions de force calculées qui pourraient mener à la fracture de la pièce moulée pendant le processus d'écartement des segments, par exemple par l'écroûtage desdits segments.
